# EUROPEAN PATENT APPLICATION

(11) **EP 4 796 409 A1**
(43) Date of publication of application: **26.08.2026**
(21) Application number: 23960861.5
(22) Date of filing: 08.12.2023
(51) Int. Cl.: B60W 50/10

(54) **PROCESSING SYSTEM, LEARNING METHOD, PROCESSING METHOD, AND PROGRAM**

(71) Applicant: HONDA MOTOR CO., LTD., Tokyo 105-8404 (JP)
(72) Inventor: TSUKAMOTO, Nanami, Wako-shi, Saitama 351-0193 (JP); HOSOMI, Naoki, Wako-shi, Saitama 351-0193 (JP)
(74) Representative: Kiwit, Benedikt
(86) International application number: PCT/JP2023/044066
(87) International publication number: WO 2025/120851

(57) **Abstract**

A processing system includes: an acquisition portion that acquires voice information relating to a voice uttered by a user, peripheral information relating to a situation around a target of a control, and movement information relating to a movement of the target; and a processing portion that determines an action of the target when input information based on the voice information, the peripheral information, and the movement information is input, based on action information obtained by inputting the input information to a learned model which outputs the action information relating to the action of the target in accordance with the input information.

## Description

### TECHNICAL FIELD

The present invention relates to a processing system, a learning method, a processing method, and a program.

### BACKGROUND ART

In the related art, an information processing apparatus is disclosed which includes: an identification means that identifies a usage scene of a target user from among a plurality of usage scenes when using a mobile body; an acquisition means that acquires utterance information of the target user; a selection means that selects a different machine learning model in accordance with the identified usage scene of the target user; and an estimation means that estimates an intention of the utterance of the target user by using the selected machine learning model (for example, refer to Patent Document 1).

### Related Art Documents

### Patent Documents

Patent Document 1: Japanese Unexamined Patent Application, First Publication No. 2022-155107

### SUMMARY OF INVENTION

### PROBLEM TO BE SOLVED BY THE INVENTION

However, in the technique described above, there may be cases in which it is not possible to select an appropriate action.

In consideration of such circumstances, an object of the present invention is to provide a processing system, a learning method, a processing method, and a program capable of selecting an appropriate action.

### MEANS FOR SOLVING THE PROBLEM

A processing system, a learning method, a processing method, and a program according to this invention employ the following configurations.
(1): A processing system of a mobile body according to an aspect of this invention includes: an acquisition portion that acquires voice information relating to a voice uttered by a user, peripheral information relating to a situation around a target of a control, and movement information relating to a movement of the target; and a processing portion that determines an action of the target when input information based on the voice information, the peripheral information, and the movement information is input, based on action information obtained by inputting the input information to a learned model which outputs the action information relating to the action of the target in accordance with the input information.
(2): In the aspect (1) described above, the input information is first feature information indicating a feature based on the voice information, the peripheral information, and the movement information.
(3): In the aspect (2) described above, the processing portion generates second feature information indicating a feature of the voice information, third feature information indicating a feature of the peripheral information, and fourth feature information indicating a feature of the movement information and derives the first feature information based on the second feature information, the third feature information, and the fourth feature information that are generated.
(4): In any of the aspect (3) described above, the input information, the voice information, the peripheral information, and the movement information are text data, and the first feature information, the second feature information, the third feature information, and the fourth feature information are data in which the text data is vectorized.
(5): In the aspect (1) described above, the learned model is a model in which learning information is learned, the learning information is information in which the input information based on the voice information, the peripheral information, and the movement information is associated with action information in accordance with the input information, and the learned model is a model learned so as to output the action information associated with the input information when the input information is input.
(6): In the aspect (1) described above, the acquisition portion further acquires interaction information between the user and the target, and the processing portion determines an action of the target when input information based on the voice information, the peripheral information, the movement information, and the interaction information is input, based on action information obtained by inputting the input information to a learned model which outputs the action information relating to the action of the target in accordance with the input information.
(7): In any of the aspects (1) to (6) described above, the processing portion controls a mobile body which is the target of the control based on the action information.
(8): In any of the aspects (1) to (6) described above, the peripheral information includes information indicating a position of an object detected by a mobile body which is the target and a type of the object, and the movement information includes position information of the mobile body, information indicating a direction of the mobile body, and information indicating a speed of the mobile body.
(9): In any of the aspects (1) to (6) described above, the processing portion estimates an utterance intention from the voice information relating to the voice uttered by the user and determines an action of the target when input information based on the utterance intention, the peripheral information, and the movement information or input information based on the utterance intention, the voice information, the peripheral information, and the movement information is input, based on action information obtained by inputting the input information to a learned model which outputs the action information relating to the action of the target in accordance with the input information.
(10): In any of the aspects (1) to (6) described above, an action of a mobile body which is the target includes at least one of a movement and an utterance of the mobile body.
(11) In any of the aspects (1) to (6) described above, an action of a mobile body which is the target includes at least one of actions of changing a speed, a movement direction, a movement distance, a stop position, and a stop time of the mobile body.
(12): In any of the aspects (1) to (6) described above, an utterance of a mobile body which is the target includes at least one of utterances of an inquiry to the user, a proposal to the user, asking again, a reply, a thank-you, an apology, an alternative plan, an arrival place, an arrival time, information on the mobile body and a peripheral environment of the mobile body, and a confirmation to the user.
(13): In a learning method according to another aspect of the present invention, a computer acquires learning information in which voice information relating to a voice uttered by a user, peripheral information relating to a situation around a target of a control, and movement information relating to a movement of the target are associated with information relating to an action of the target and generates a learned model by causing a learning model to learn so as to output information relating to the action of the target associated with the voice information, the peripheral information, and the movement information by using the acquired learning information when input information based on the voice information, the peripheral information, and the movement information is input.
(14): A processing method according to another aspect of the present invention is a processing method in which a computer acquires voice information relating to a voice uttered by a user, peripheral information relating to a situation around a target of a control, and movement information relating to a movement of the target and determines an action of the target when input information based on the voice information, the peripheral information, and the movement information is input, based on action information obtained by inputting the input information to a learned model which outputs the action information relating to the action of the target in accordance with the input information.
(15): A program according to another aspect of the present invention causes a computer to execute: acquiring voice information relating to a voice uttered by a user, peripheral information relating to a situation around a target of a control, and movement information relating to a movement of the target; and determining an action of the target when input information based on the voice information, the peripheral information, and the movement information is input, based on action information obtained by inputting the input information to a learned model which outputs the action information relating to the action of the target in accordance with the input information.

### EFFECT OF THE INVENTION

According to the aspects (1) to (15) described above, it is possible to select an appropriate action.

According to the aspect (7) described above, it is possible to more appropriately control the mobile body.

According to the aspect (8) described above, it is possible to select a more appropriate action by using a peripheral environment of the mobile body and a state of the mobile body.

### BRIEF DESCRIPTION OF DRAWINGS

[FIG. 1] FIG. 1 is a view showing an example of a configuration of a processing system 1 including a mobile body.
[FIG. 2] FIG. 2 is a view showing an example of a functional configuration of the mobile body.
[FIG. 3] FIG. 3 is a view showing an example of a functional configuration of a server device.
[FIG. 4] FIG. 4 is a view for explaining an outline of a process.
[FIG. 5] FIG. 5 is a view for explaining a process in which input information is generated.
[FIG. 6] FIG. 6 is a view showing an example of contents of action correspondence information.
[FIG. 7] FIG. 7 is a view showing an example of control information.
[FIG. 8] FIG. 8 is a view showing an example of an action of a user and an action of the mobile body.
[FIG. 9] FIG. 9 is a flowchart showing an example of a flow of a process performed by the server device.
[FIG. 10] FIG. 10 is a view for explaining an utterance intention.
[FIG. 11] FIG. 11 is a view showing an example of learning information.

### DESCRIPTION OF EMBODIMENTS

Hereinafter, embodiments of a processing system, a learning method, a processing method, and a program of the present invention will be described with reference to the drawings.

A processing system of the present invention determines an action performed by a target or controls a target to perform a predetermined action. The target is a mobile body (an automobile, a motorcycle, a light vehicle, a micromobility, or an aircraft), a robot (for example, an interaction robot), an object (for example, an interaction robot arm or an interaction robot hand) that mechanically operates, or the like. In the following description, the target is a small mobile body. For example, the target is a small vehicle.

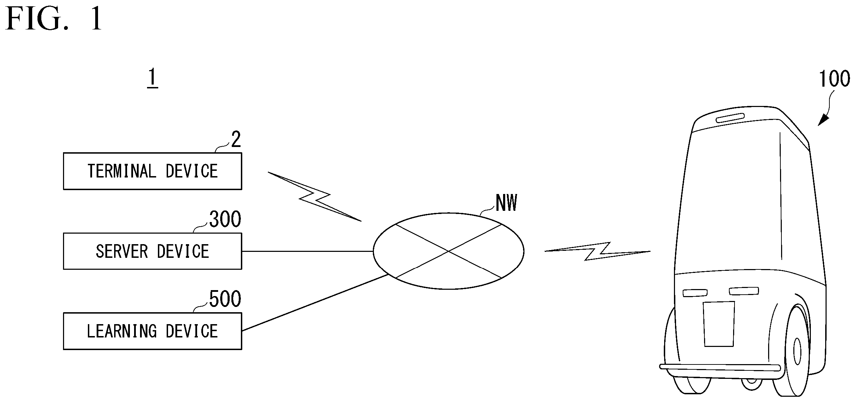

FIG. 1 is a view showing an example of a configuration of a processing system 1 including a mobile body 100. The processing system 1 includes, for example, one or more terminal devices 2, one or more mobile bodies 100, a server device 300, and a learning device 500. These components communicate with each other, for example, via a network NW. The network NW is for example, an arbitrary network such as a LAN, a WAN, or an Internet line.

### [Terminal device]

The terminal device 2 is, for example, a computer device such as a smartphone or a tablet terminal. The terminal device 2 requests provision of authorization for the use of the mobile body 100 or acquires information indicating that the use is allowed, for example, on the basis of an operation of a user. The terminal device 2 provides the server device 300 with the voice input by the user to a microphone of the terminal device 2.

### [Mobile body]

The mobile body 100 is autonomously movable in a region in which a vehicle can travel, a region in which a pedestrian can move, or the like. The mobile body 100 can pass, for example, through a region in which a vehicle cannot pass. The mobile body 100 is movable in a region in which a pedestrian can pass such as a roadway and a sidewalk. For example, the mobile body 100 may be used in an indoor or outdoor facility such as a shopping center, an airport, a park, or a theme park, or in a private land and is movable in a region in which a pedestrian can pass.

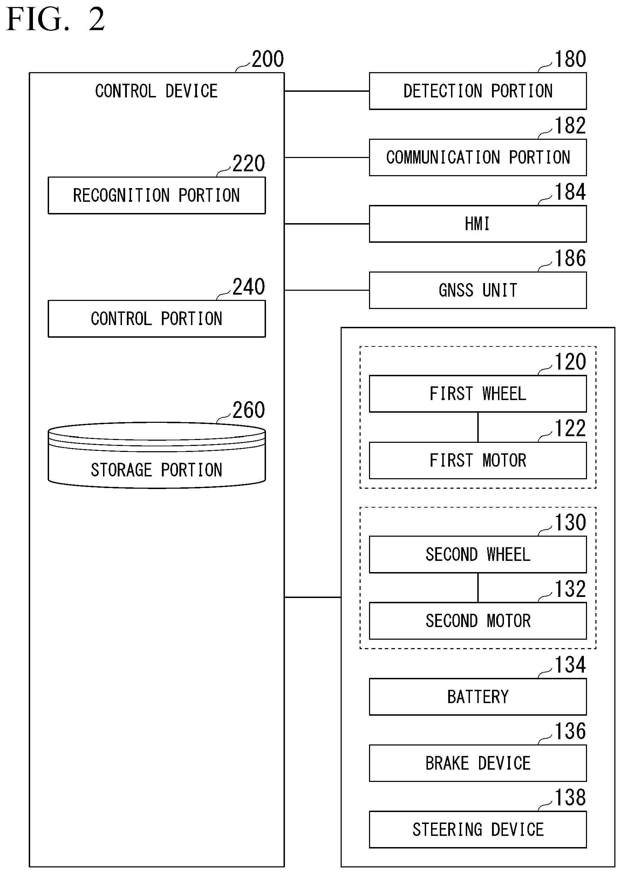

FIG. 2 is a view showing an example of a functional configuration of the mobile body 100. The mobile body 100 includes a first wheel 120, a first motor 122, a second wheel 130, a second motor 132, a battery 134, a brake device 136, a steering device 138, a detection portion 180, a communication portion 182, an HMI 184, a GNSS (Global Navigation Satellite System) unit 186, and a control device 200. Some of the functional configurations described above may be omitted.

The first motor 122 and the second motor 132 are operated by electric power supplied to the battery 134. The first motor 122 drives the first wheel 120, and the second motor 132 drives the second wheel 130. The first motor 122 may be an in-wheel motor provided on a wheel of the first wheel 120, and the second motor 132 may be an in-wheel motor provided on a wheel of the second wheel 130.

The brake device 136 outputs a brake torque to each wheel on the basis of a command of the control device 200. The steering device 138 includes an electric motor. The electric motor changes the course of the mobile body 100, for example, by applying a force to a rack-and-pinion mechanism on the basis of a command of the control device 200 and changing the direction of the first wheel 120 or the second wheel 130.

The detection portion 180 is, for example, one or more cameras that capture an image of a scene of a target region. The detection portion 180 captures the image of the scene at a predetermined interval. The detection portion 180 may be a sensor that is capable of detecting an object or the like such as a radar or a lidar (Light Detection and Racing) in place of (or in addition to) the camera.

The communication portion 182 is a communication interface for communicating with the terminal device 2 or the server device 300.

The HMI 184 presents various information to the user or receives an input operation by the user. The HMI 184 includes various display devices, a speaker, a microphone, a buzzer, a touch panel, a switch, a key, and the like.

The GNSS unit 186 includes a position specifying device. The position specifying device is a device that specifies the position of the mobile body 100. The position specifying device includes, for example, a GNSS receiver that specifies the position of the mobile body 100 on the basis of a signal received from a GNSS (Global Navigation Satellite System) satellite.

In addition to the configuration described above, a sensor or the like that detects a state of the mobile body 100 such as the speed or direction may be provided on the mobile body 100. Information held by the mobile body 100 may be provided to the server device 300. For example, the mobile body 100 provides the server device 300 with information required for the process of the server device 300 such as the direction in which the mobile body 100 faces and the speed of the mobile body 100.

### [Control device]

The control device 200 includes, for example, a recognition portion 220 and a control portion 240. The recognition portion 220 and the control portion 240 are realized, for example, by a hardware processor such as a CPU (Central Processing Unit) executing a program (software). Some or all of these components may be realized by hardware (a circuit portion; including circuitry) such as an LSI (Large Scale Integration), an ASIC (Application Specific Integrated Circuit), an FPGA (Field-Programmable Gate Array), a GPU (Graphics Processing Unit), or an SOC (System On Chip), or may be realized by cooperation of software and hardware. The program may be stored in advance in a storage device (a storage device including a non-transitory storage medium) such as an HDD (Hard Disk Drive) or a flash memory or may be stored in a removable storage medium (non-transitory storage medium) such as a DVD or a CD-ROM and be installed by attaching the storage medium to a drive device.

A storage portion 260 is realized by a storage device such as an HDD, a flash memory, or a RAM (Random Access Memory). A program executed by the control device 200, information used for various processes, and the like are stored in the storage portion 260. Information on the region in which the mobile body 100 can move, information on a landmark such as a building, and information on a shop or the like may be stored in the storage portion 260.

The recognition portion 220 recognizes a state such as the type, the position, the speed, and the acceleration of an object that is present in the vicinity of the mobile body 100, for example, on the basis of an image captured by the detection portion 180. The object includes a traffic participant, an obstacle that is present in the facility or on the road, and the like. The recognition portion 220 may recognize and track the user of the mobile body 100. For example, the recognition portion 220 tracks the user on the basis of an image (for example, a face image of the user or the entire image) in which the user registered via the HMI 184 when the user uses the mobile body 100 is captured, or a face image (or a feature amount obtained from the face image of the user) of the user provided by the terminal device 2 or the server device 300. When the detection portion 180 is a radar device, a LIDAR, or the like, the recognition portion 220 may recognize the situation around the mobile body 100 by using the detection result of the radar device or the LIDAR instead of (or in addition to) the image.

The control portion 240 generates a trajectory to a destination specified by the user. The destination may be a place of a facility, a predetermined landmark, a predetermined mark, or the like. The trajectory is a trajectory by which it is possible to reasonably reach a destination without interfering with an object. For example, the distance to the destination, the time required for reaching the destination, the ease of passing of the trajectory, and the like are scored, and a trajectory in which each score and a score obtained by integrating the scores are equal to or more than a threshold value is derived.

The control portion 240 controls the motor (the first motor 122, the second motor 132), the brake device 136, and the steering device 138 such that the mobile body 100 travels along the trajectory that satisfies a preset standard. The control portion 240 controls the HMI to output a voice from the HMI.

### [Server device]

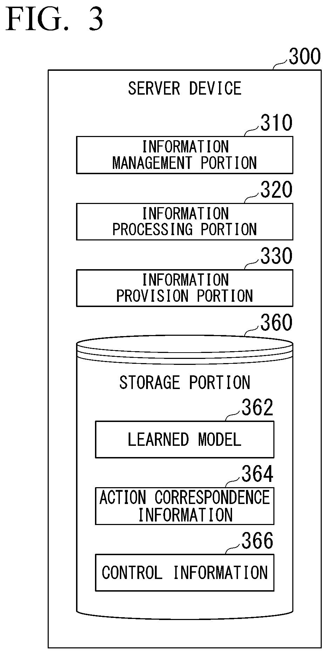

FIG. 3 is a view showing an example of a functional configuration of the server device. The server device 300 includes, for example, an information management portion 310, an information processing portion 320, and an information provision portion 330. The information processing portion 320, or a functional configuration of the information processing portion 320 and the information provision portion 330 is an example of a "processing portion".

The information management portion 310, the information processing portion 320, and the information provision portion 330 are realized, for example, by a hardware processor such as a CPU executing a program (software). Some or all of these components may be realized by hardware (a circuit portion; including circuitry) such as an LSI, an ASIC, an FPGA, a GPU, or an SOC, or may be realized by cooperation of software and hardware. The program may be stored in advance in a storage device (a storage device including a non-transitory storage medium) such as an HDD or a flash memory or may be stored in a removable storage medium (non-transitory storage medium) such as a DVD or a CD-ROM and be installed by attaching the storage medium to a drive device.

A storage portion 360 is realized by a storage device such as an HDD, a flash memory, or a RAM (Random Access Memory). A learned model 362, action correspondence information 364, control information 366, and the like are stored in the storage portion 260. The learned model 362 is, for example, a decision tree algorithm such as the LightGBM or another machine learning model. Details of the information will be described later.

The information management portion 310 acquires voice information relating to a voice uttered by the user, peripheral information relating to a situation around a target (for example, the mobile body 100) of a control, and movement information relating to the movement of the target. The information management portion 310 acquires information (the voice information, the peripheral information, and the movement information) acquired by the control device of the mobile body 100 from the mobile body 100.

The information processing portion 320 determines an action of the target on the basis of action information obtained by inputting input information based on the voice information, the peripheral information, and the movement information to the learned model 362.

The information provision portion 330 controls the mobile body 100 such that the mobile body 100 acts based on the determined action. The information provision portion 330 provides the mobile body 100 with command information that commands an operation of the mobile body 100. The command information may be information (for example, a control scenario) that defines each action or may be a detailed control value.

Some or all of the functional configurations of the server device 300 described above may be mounted on the mobile body 100. Some of the functional configurations included in the mobile body 100 described above may be mounted on the server device 300.

### [Outline]

When the input information based on the voice information, the peripheral information, and the movement information is input, the server device 300 determines the action of the target on the basis of the action information obtained by inputting the input information to the learned model 362 which outputs the action information relating to the action of the target in accordance with the input information.

The server device 300 may input, to the learned model 362, the input information obtained by adding interaction information to the above information and determine the action of the target on the basis of the action information obtained by inputting the input information. In the following example, the interaction information is used.

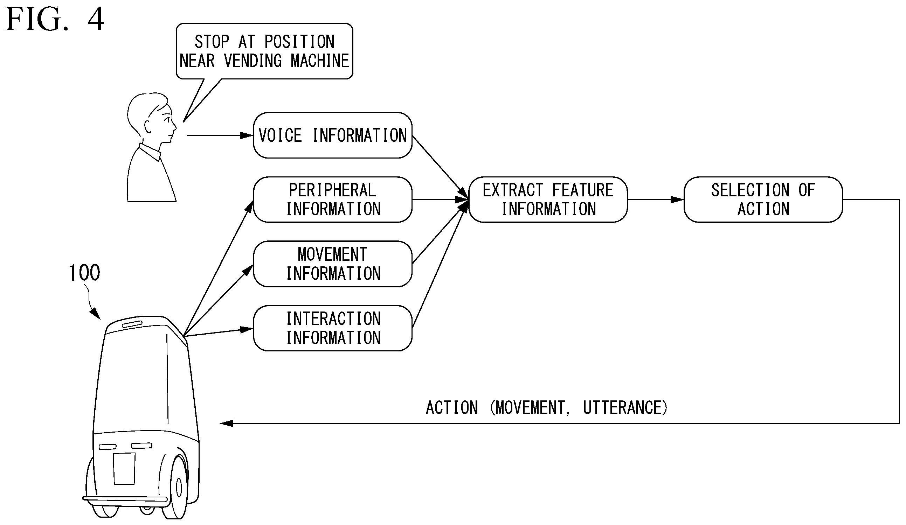

FIG. 4 is a view for explaining an outline of a process. On the basis of the voice information, the peripheral information, the movement information, and the interaction information, the server device 300 extracts feature information indicating these features and selects an action by using information based on the extracted feature information as input information. The server device 300 provides the mobile body 100 with information relating to the selected action. The action is one or both of a movement and an utterance. The mobile body 100 moves or speaks based on control information of the server device 300.

The voice information is, for example, information on an utterance sentence of the user, which is acquired by voice recognition. The voice information is, for example, text data of the utterance sentence. The information processing portion 320 analyzes the acquired utterance sentence, converts the utterance sentence into text data, and generates voice information. The voice information is information on the utterance of the user and may be provided from the mobile body 100 or may be provided from the terminal device 2.

The peripheral information is, for example, a detection result of a peripheral environment of the mobile body 100 such as a detection result of an object detected or recognized by the mobile body 100 or a detection result of a landmark. The detection result includes the type (for example, a person, an object, or the like), the number, the color, the coordinate, the distance to the mobile body 100, the certainty factor, and the like of the object. The peripheral information is, for example, text data obtained from the result of detection of the detection portion 180. The text data obtained from the result of detection is, for example, text data indicating the peripheral environment and is a text (for example, "human" in the case of a person) indicating the type of the object, the color (for example, "black" when the object is black) of the object, or the like. For example, when one person is present 5 meters ahead of the mobile body 100, text data indicating that "one person is located 5 meters ahead of the mobile body 100" is the peripheral information.

The information processing portion 320 acquires the result of detection of the detection portion 180 or the result of recognition of the recognition portion 220, analyzes the acquired result of detection or recognition, and converts the result of detection or recognition into text data. The information processing portion 320 specifies the type, the position, the distance to the mobile body 100, the certainty factor, and the like of the object included in the result of detection by using a predetermined algorithm and generates peripheral information which is text data on the basis of the specified result.

The movement information includes, for example, information relating to the movement of the mobile body 100 such as position information of the mobile body 100, the direction of the mobile body 100, the speed of the mobile body 100, the distance from the current position of the mobile body 100 to a destination, the difference in the coordinate from the location of the mobile body 100 in the previous utterance point of the user to the current location of the mobile body 100, and the traffic situation (traffic jam, one way, closure, no movement). The movement information is, for example, text data relating to the movement of the mobile body 100. The movement information is, for example, text data indicating that the mobile body 100 is traveling at a speed of 5 km/h, that the distance to the destination is 20 m, or the like.

The traffic situation is information derived by the server device 300 on the basis of the position of the mobile body 100, map information held by the server device 300, and traffic jam information. For example, the server device 300 refers to the map information and the traffic jam information corresponding to the position of the mobile body 100, recognizes the presence or absence of a traffic jam, a road sign and the type of a road included in the map information, and the like, and acquires the traffic situation. The traffic situation may be handled as information (peripheral information detected by the detection portion 180 or peripheral information recognized by the recognition portion 220) included in the peripheral information instead of the movement information.

The information processing portion 320 acquires information relating to the movement of the mobile body 100, analyzes the acquired information relating to the movement, and converts the information relating to the movement into text data. The information processing portion 320 converts information on the speed and information on the distance, the difference in the coordinate, the traffic situation, and the like into text data on the basis of a predetermined algorithm.

The interaction information includes, for example, an utterance sentence of the mobile body 100, an elapsed time from the previous utterance of the user to the current utterance, the number of utterances of the mobile body 100 or the user, the number of executions for each type of action, the name of a landmark passed, and the like. The interaction information is not limited to those described above and may be information that interacts between the mobile body 100 and the user.

The information processing portion 320 acquires interaction information, analyzes the acquired interaction information, and converts the interaction information into text data. The information processing portion 320 converts information such as the utterance sentence of the mobile body 100, the elapsed time, and the number of utterances into text data on the basis of the predetermined algorithm.

### [About generation of input information]

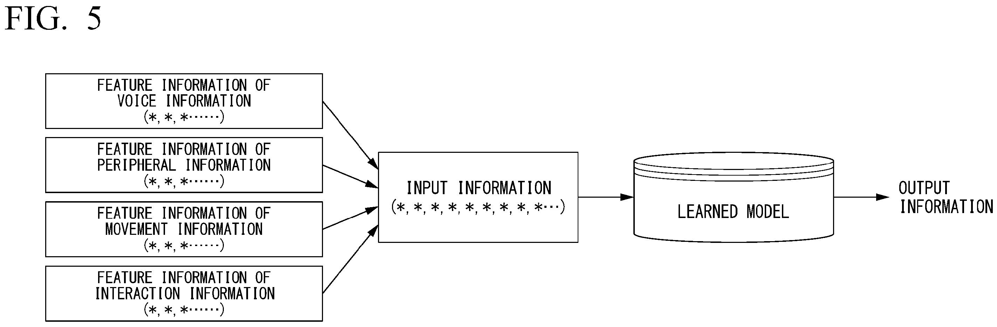

FIG. 5 is a view for explaining a process in which input information is generated. The information processing portion 320 converts each of the text data described above into feature information (feature vector). The feature information is obtained by vectorizing the text data by using a method of distributed representation. For example, the information processing portion 320 generates a vector of a first predetermined dimension such as [0, 1, 0, 0] from the text data and compresses the generated vector into a vector of a second predetermined dimension. For example, the information processing portion 320 performs a principal component analysis (PCA) and performs compression.

A value that forms the vector is not limited to the value described above and may be an arbitrary value between minus 1 and plus 1 or the like. The information processing portion 320 generates, for example, a feature vector (second feature information) obtained by vectorizing text data of the voice information, a feature vector (third feature information) obtained by vectorizing text data of the peripheral information, and a feature vector (fourth feature information) obtained by vectorizing text data of the movement information.

The information processing portion 320 generates input information by linking the feature information (feature vectors). For example, the order of the linking is a prescribed order. The input information is an example of "first feature information indicating a feature based on the voice information, the peripheral information, and the movement information". When the input information is input, the learned model 362 outputs output information. The output information is, for example, identification information for identifying the action of the action correspondence information 364.

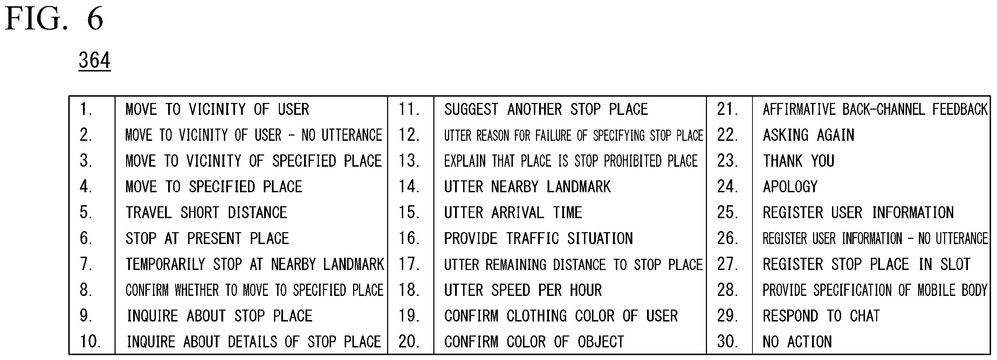

FIG. 6 is a view showing an example of contents of the action correspondence information 364. The action correspondence information 364 is information in which identification information and an action are associated with each other. In the present embodiment, the action correspondence information 364 defines actions of identification information 1 to 30. The following is an example, and other examples may be included. The action may be only an utterance, may be only a movement or may be a combination of these. For example, the processing system 1 controls the utterance of the mobile body 100 and moves the mobile body 100.

An "utterance control" includes, for example, at least one of utterance controls of an inquiry to the user, a proposal to the user, asking again, a reply, a thank-you, an apology, an alternative plan, an arrival place, an arrival time, information on the mobile body 100 and a peripheral environment of the mobile body 100, and a confirmation to the user.

A "movement control" includes at least one of controls of changing a speed, a movement direction, a movement distance, a stop position, and a stop time of the mobile body 100.
1. Move to the vicinity of a user
2. Move to the vicinity of a user · No utterance
3. Move to the vicinity of a specified place
4. Move to a specified place
5. Travel a short distance
6. Stop at the present place
7. Temporarily stop at a nearby landmark
8. Confirm whether to move to a specified place
9. Inquire about a stop place
10. Inquire about the details of a stop place
11. Suggest another stop place
12. Utter the reason for the failure of specifying a stop place
13. Explain that the place is a stop prohibited place
14. Utter a nearby landmark
15. Utter an arrival time
16. Provide a traffic situation
17. Utter a remaining distance to a stop place
18. Utter a speed per hour
19. Confirm the color of the clothing of a user
20. Confirm the color of an object
21. Affirmative back-channel feedback
22. Asking again
23. Thank you
24. Apology
25. Register user information
26. Register user information, no utterance
27. Register a stop place in a slot
28. Provide the specification of a mobile body
29. Respond to a chat
30. No action

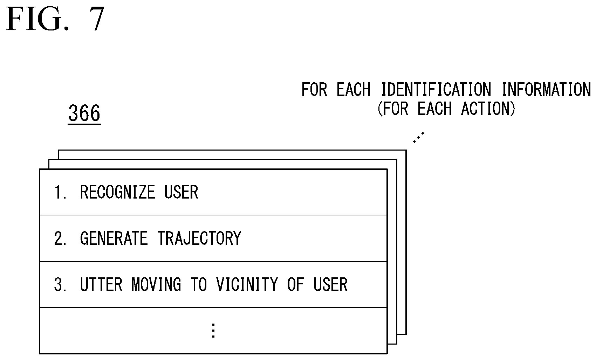

The processing system 1 (one or both of the server device 300 and the control device 200 of the mobile body 100) controls the mobile body 100 on the basis of the above action and the control information 366. FIG. 7 is a view showing an example of the control information 366. The control information 366 is information in which a control scenario and a process procedure for each action are defined. In the control information 366, only an utterance or only an action (only a motion) may be defined, or a combination of an utterance and an action may be defined. For example, when the identification information "1. Move to the vicinity of a user" of the action correspondence information 364 is specified, processes 1, 2, 3, ... defined in the control information 366 are performed. The process 1 is that the processing system 1 recognizes a user. The process 2 is that the processing system 1 generates a trajectory to the vicinity of the user. The process 3 is that the processing system 1 utters that the mobile body 100 moves to the vicinity of the user. In this way, the processing system 1 controls the mobile body 100 on the basis of the control information 366.

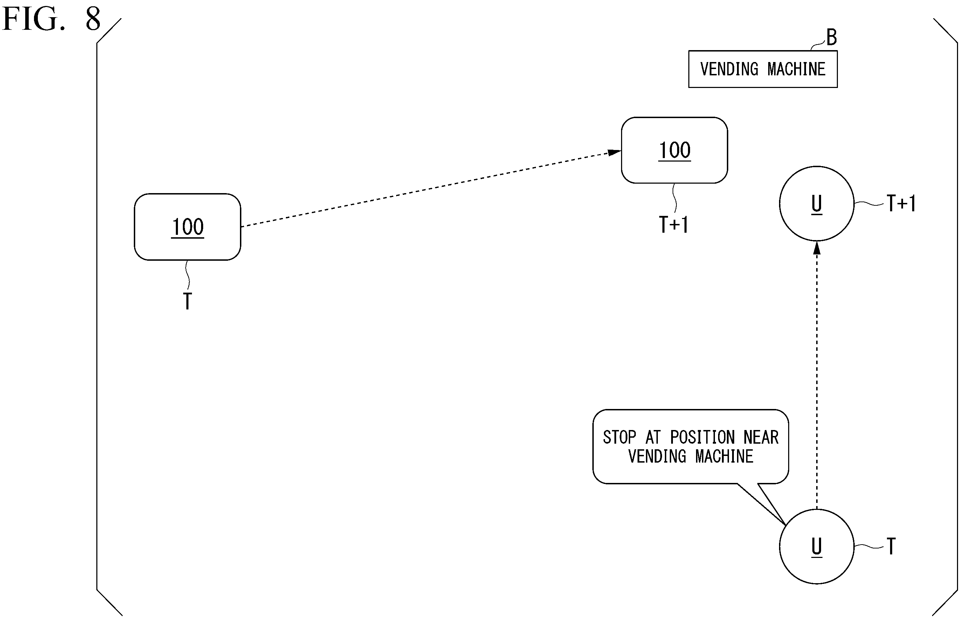

FIG. 8 is a view showing an example of an action of a user U and an action of the mobile body 100. At a time T, for example, it is assumed that the user U utters "Stop at a position near the vending machine". The contents (or the voice information or information that becomes an origin of the voice information) of the utterance is provided to the server device 300. Further, the peripheral information, the movement information, and the interaction information (or the information that becomes an origin of the peripheral information, the movement information, and the interaction information) is provided from the mobile body 100 to the server device 300. The interaction information may be held in the server device 300. The server device 300 determines the action of the mobile body 100 on the basis of the acquired information and controls the mobile body 100.

At a time T+1, the server device 300 specifies the action and the process procedure and moves the mobile body 100 to a position near a vending machine B. At this time, when an obstacle is present, the mobile body 100 recognizes the obstacle and approaches the vending machine B while avoiding the obstacle. In the example of FIG. 8, at the time T+1, the user U also moves to the vicinity of the vending machine B, and the user U can meet the mobile body 100 in the vicinity of the vending machine B.

As described above, the server device 300 can select an appropriate action and control the mobile body 100 to perform the appropriate action by using various information as described above.

### [Flowchart]

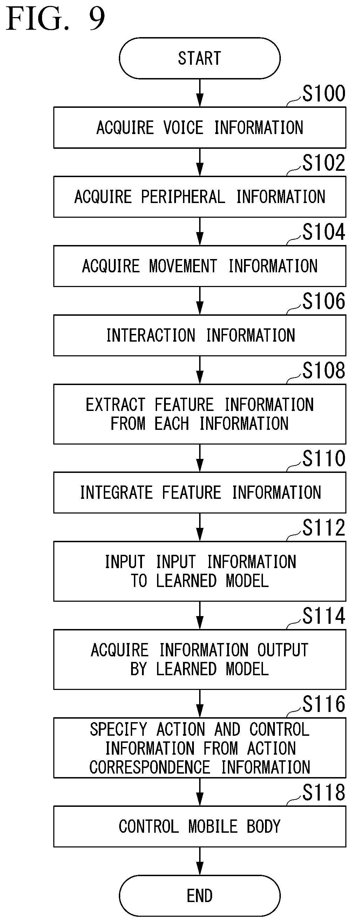

FIG. 9 is a flowchart showing an example of a flow of a process performed by the server device 300. First, the server device 300 acquires voice information, peripheral information, movement information, and interaction information (Step S100, Step S102, Step S104, and Step S106). Next, the server device 300 extracts feature information indicating the feature of each information from each acquired information (Step S108). For example, feature information of the voice information, feature information of the peripheral information, feature information of the movement information, and feature information of the interaction information are extracted.

Next, the server device 300 integrates the feature information and generates input information (Step S110). Next, the server device 300 inputs input information to the learned model 362 (Step S112). Next, the server device 300 acquires output information output by the learned model 362 (Step S114).

Next, the server device 300 specifies the action and the control information on the basis of the action correspondence information 364 and the output information (Step S116). Next, the server device 300 controls the mobile body 100 on the basis of the specified action (Step S118). Thereby, the process of one routine of the present flowchart is ended. As described above, the processing system 1 can select an appropriate action.

Here, for example, when the action is selected by using only the utterance, there may be cases in which an appropriate action is not selected. Further, for example, when a learned model is prepared for each scene and the learned model is used in accordance with the scene, the structure of a system may become complicated.

In the present embodiment, as described above, by using information other than the utterance, it is possible to select a further appropriate action in consideration of the state of the mobile body 100 and the peripheral environment, and since it is not necessary to prepare a plurality of learned models, it is possible to further easily structure a system.

### [Use of utterance intention]

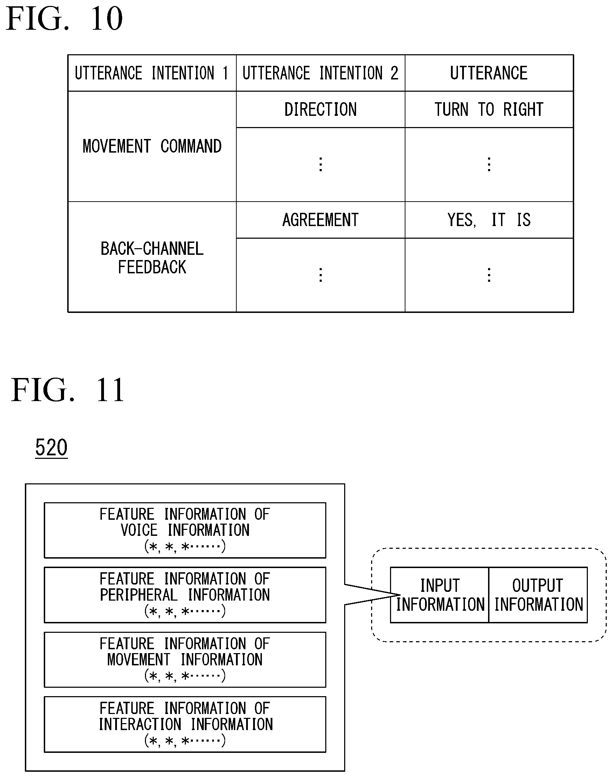

When generating the feature information from the voice information, the information processing portion 320 may generate the feature information (second feature information) by using an utterance intention. FIG. 10 is a view for explaining the utterance intention. As shown in FIG. 10, an utterance intention 2 is associated with a plurality of utterances, and an utterance intention 1 is associated with a plurality of utterance intentions 2. The utterance intention 1 is a superordinate concept of the utterance intention 2. For example, the utterance intention 1 is a large item such as a "movement command" or "back-channel feedback", the utterance intention 2 corresponding to the "movement command" of the utterance intention 1 is a medium item such as a "direction", and the utterance of the "direction" is "turn to the right" or the like. The information processing portion 320 may generate, for example, feature information based on one or more items of the utterance intention 1, the utterance intention 2, and the utterance or may generate feature information based on the utterance and one or both of the utterance intention 1 and the utterance intention 2. When input information based on the utterance intention, the peripheral information, and the movement information or input information based on the utterance intention, the voice information, the peripheral information, and the movement information is input, the information processing portion 320 determines the action of the target on the basis of action information obtained by inputting the input information to the learned model 362 which outputs the action information relating to the action of the mobile body 100 in accordance with the input information.

As described above, by using the utterance intention, feature information that further reflects the type of the utterance is generated.

### [Learning device]

The learning device 500 learns learning information and generates the learned model 362. FIG. 11 is a view showing an example of learning information 520. The learning information 520 is information in which input information for learning and action information are associated with each other. The input information is information (input information generated by linking feature vectors) based on the feature information of the voice information, the feature information of the peripheral information, the feature information of the movement information, and the feature information of the interaction information. The action information is an utterance, an action, or a combination of an utterance and an action. The action information is action information considered to be appropriate in an environment and a situation in which the input information is obtained. When the input information of the learning information 520 is input, the learning device 500 generates the learned model 362 that is learned so as to output the action information associated with the input information of the learning information 520.

The position of the mobile body 100 on the map, information of each sensor included in the mobile body 100, and the like may be used as the feature information. In this case, the learning device 500 learns learning information in which input information including the feature information and action information are associated with each other. The server device 300 may input the input information including the feature information to the learned model 362 and obtain output information. Further, the information of the utterance intention described above may be included in the learning information 520. In this case, when input information based on the utterance intention, the peripheral information, and the movement information or input information based on the utterance intention, the voice information, the peripheral information, and the movement information is input, the learned model 362 is learned so as to output action information relating to the action of the mobile body 100 in accordance with the input information. Then, the learned model 362 outputs the action information in accordance with the input information.

According to the embodiment described above, when input information based on the voice information, the peripheral information, and the movement information is input, the processing system 1 determines the action of the target on the basis of the action information obtained by inputting the input information to the learned model which outputs the action information relating to the action of the target in accordance with the input information, and thereby, it is possible to select an appropriate action.

The embodiment described above can be represented as follows.

A processing system including
a storage medium storing computer-readable instructions, and
a processor connected to the storage medium, the processor executing the computer-readable instructions to:
   acquire voice information relating to a voice uttered by a user, peripheral information relating to a situation around a target of a control, and movement information relating to a movement of the target; and
   determine an action of the target when input information based on the voice information, the peripheral information, and the movement information is input, based on action information obtained by inputting the input information to a learned model which outputs the action information relating to the action of the target in accordance with the input information.

Although modes for carrying out the present invention have been described using the embodiments, the present invention is not limited to the embodiments, and various modifications and substitutions can be made without departing from the scope of the present invention.

### DESCRIPTION OF REFERENCE SYMBOLS

1 Processing system
2 Terminal device
100 Mobile body
180 Detection portion
200 Control device
220 Recognition portion
240 Control portion
260 Storage portion
300 Server device
310 Information management portion
320 Information processing portion
330 Information provision portion
360 Storage portion
362 Learned model
364 Action correspondence information
366 Control information

## Claims

1. A processing system comprising:
an acquisition portion that acquires voice information relating to a voice uttered by a user, peripheral information relating to a situation around a target of a control, and movement information relating to a movement of the target; and
a processing portion that determines an action of the target when input information based on the voice information, the peripheral information, and the movement information is input, based on action information obtained by inputting the input information to a learned model which outputs the action information relating to the action of the target in accordance with the input information.

2. The processing system according to claim 1,
wherein the input information is first feature information indicating a feature based on the voice information, the peripheral information, and the movement information.

3. The processing system according to claim 2,
wherein the processing portion generates second feature information indicating a feature of the voice information, third feature information indicating a feature of the peripheral information, and fourth feature information indicating a feature of the movement information and derives the first feature information based on the second feature information, the third feature information, and the fourth feature information that are generated.

4. The processing system according to claim 3,
wherein the input information, the voice information, the peripheral information, and the movement information are text data, and
the first feature information, the second feature information, the third feature information, and the fourth feature information are data in which the text data is vectorized.

5. The processing system according to claim 1,
wherein the learned model is a model in which learning information is learned,
the learning information is information in which the input information based on the voice information, the peripheral information, and the movement information is associated with action information in accordance with the input information, and
the learned model is a model learned so as to output the action information associated with the input information when the input information is input.

6. The processing system according to claim 1,
wherein the acquisition portion further acquires interaction information between the user and the target, and
the processing portion determines an action of the target when input information based on the voice information, the peripheral information, the movement information, and the interaction information is input, based on action information obtained by inputting the input information to a learned model which outputs the action information relating to the action of the target in accordance with the input information.

7. The processing system according to any one of claims 1 to 6,
wherein the processing portion controls a mobile body which is the target of the control based on the action information.

8. The processing system according to any one of claims 1 to 6,
wherein the peripheral information includes information indicating a position of an object detected by a mobile body which is the target and a type of the object, and
the movement information includes position information of the mobile body, information indicating a direction of the mobile body, and information indicating a speed of the mobile body.

9. The processing system according to any one of claims 1 to 6,
wherein the processing portion
estimates an utterance intention from the voice information relating to the voice uttered by the user and
determines an action of the target when input information based on the utterance intention, the peripheral information, and the movement information or input information based on the utterance intention, the voice information, the peripheral information, and the movement information is input, based on action information obtained by inputting the input information to a learned model which outputs the action information relating to the action of the target in accordance with the input information.

10. The processing system according to any one of claims 1 to 6,
wherein an action of a mobile body which is the target includes at least one of a movement and an utterance of the mobile body.

11. The processing system according to any one of claims 1 to 6,
wherein an action of a mobile body which is the target includes at least one of actions of changing a speed, a movement direction, a movement distance, a stop position, and a stop time of the mobile body.

12. The processing system according to any one of claims 1 to 6,
wherein an utterance of a mobile body which is the target includes at least one of utterances of an inquiry to the user, a proposal to the user, asking again, a reply, a thank-you, an apology, an alternative plan, an arrival place, an arrival time, information on the mobile body and a peripheral environment of the mobile body, and a confirmation to the user.

13. A learning method,
wherein a computer
acquires learning information in which voice information relating to a voice uttered by a user, peripheral information relating to a situation around a target of a control, and movement information relating to a movement of the target are associated with information relating to an action of the target, and
generates a learned model by causing a learning model to learn so as to output information relating to the action of the target associated with the voice information, the peripheral information, and the movement information by using the acquired learning information when input information based on the voice information, the peripheral information, and the movement information is input.

14. A processing method,
wherein a computer
acquires voice information relating to a voice uttered by a user, peripheral information relating to a situation around a target of a control, and movement information relating to a movement of the target, and
determines an action of the target when input information based on the voice information, the peripheral information, and the movement information is input, based on action information obtained by inputting the input information to a learned model which outputs the action information relating to the action of the target in accordance with the input information.

15. A program causing a computer to execute:
acquiring voice information relating to a voice uttered by a user, peripheral information relating to a situation around a target of a control, and movement information relating to a movement of the target; and
determining an action of the target when input information based on the voice information, the peripheral information, and the movement information is input, based on action information obtained by inputting the input information to a learned model which outputs the action information relating to the action of the target in accordance with the input information.
